# EUROPEAN PATENT APPLICATION

(11) **EP 2 710 891 A1**
(43) Date of publication of application: **26.03.2014**
(21) Application number: 13004487.8
(22) Date of filing: 13.09.2013
(51) Int. Cl.: A01M 23/00, H04L 29/08, H04W 84/18

(54) **Wireless notification system and method for electronic rodent traps**

(30) Priority: 25.09.2012 US 201213626224
(71) Applicant: WOODSTREAM CORPORATION, Lititz, PA 17543 (US)
(72) Inventor: Rich, Christopher, Leola, PA 17540 (US); Daly, Jr., Thomas J., Lititz, PA 17543 (US)
(74) Representative: Thoma, Michael

(57) **Abstract**

A remote notification electronic rodent trapping system and method is provided having a plurality of electronic rodent trapping devices configured to wirelessly communicate trap information to each other and to a PC or wireless device. Each being equipped with an RF transceiver, the rodent trapping devices form a mesh network with one another in which the trapping devices act as repeaters so that if one trap loses connectivity with the PC, information from that trap can be transmitted to the PC via another trap. The system and method can include forwarding trap status data to a remote notification website where the user can review the data. The web server hosting the website can also provide trap status data directly to a smartphone app on a user's smartphone. In addition, the website can send email and text notification to any remote device capable of receiving email or text messages.

## Description

### BACKGROUND OF THE INVENTION

### Field of the Invention

The present invention is related to the field of pest control and pest trap monitoring and, more particularly, to a remote notification electronic rodent trapping system and method having electronic rodent traps with wireless communication capability enabling remote monitoring of trap status.

### Description of the Related Art

Rodent trap monitoring has typically required that the user come in close proximity to the trap to determine whether or not a rodent has been dispatched or the trap deactivated. Physically checking rodent traps can be inconvenient, particularly when the traps are located in a barn, attic, basement, crawl space, etc. Trap monitoring can also be very time consuming for users such as professional rodent control companies who place traps at multiple sites and then must physically visit each site on a regular basis to monitor the status of the traps and ensure traps are in an operational-ready state.

Therefore, a need exists for a system and method that enables rodent traps to be monitored remotely, eliminating the costly and time consuming task of going on-site to check individual traps to see whether or not they have been activated.

### SUMMARY OF THE INVENTION

Accordingly, the present invention is directed to a remote notification electronic rodent trapping system. The system includes one or more electronic rodent trapping devices having wireless communication and networking capabilities, and a base station in communication with the trapping devices to enable the status of the traps to be remotely monitored.

Each trapping device is equipped with an RF transceiver that enables the trapping device to wirelessly communicate with the base station. According to an illustrated embodiment, the base station is a PC having a separate USB transceiver which is attached to the PC and configured to receive RF transmissions. The PC has a program installed thereon that allows the user to interact with a website, referred to herein as "the remote notification website", which is dedicated to operational control of the remote notification electronic rodent trapping system of each user. The software is transparent to the user, running in the background, and acts to forward information to the remote notification website.

In a first illustrated embodiment, a plurality of trapping devices are in communication with the PC and with each other. Each of the electronic rodent trapping devices includes a control circuit with a module having an embedded Synapse Network Application Protocol (SNAP®) network operating system that enables the device to communicate with the other trapping devices via the transceiver. The SNAP® operating system, developed by Synapse Wireless®, Inc., of Huntsville, Alabama, will be described more fully hereinafter.

The PC, when connected to the Internet, accesses the remote notification website which is designed to run a mesh network for wireless machine-to-machine communication. Computer devices other than a PC can also be used to access the remote notification website and monitor the remotely located electronic rodent trap systems. Accordingly, while use of a "PC" is described herein, it is understood that this term is intended to include other computing devices such as a MAC, tablet, smart phone, etc., that are capable of accessing the Internet in the manner described herein.

According to the machine-to-machine communication system, the trapping devices form a peer-to-peer network in which the trapping devices communicate with one another and with the PC. The trapping devices, also referred to herein simply as "traps", also act as repeaters so that if one trap loses connectivity with the PC, information from that trap can be transmitted to the PC via another trap. In addition, because the traps communicate with and through each other, the range over which traps may be distributed is increased as traps that are outside the range of direct communication with the base station can communicate with the base station via one or more intervening traps. The user can monitor trap status, battery life and signal strength by accessing the remote notification website with the PC. The software running at the remote notification website is capable of sending email and text notification to any on-line PC over the Internet, or to any device capable of receiving a text message, when trap status has changed.

According to a second embodiment, the PC can be loaded with SNAP®. The SNAP® software also has an embedded operating system designed to run a mesh network for wireless machine-to-machine communication. The SNAP® software and related features are disclosed in U.S. Patent Nos. 7,790,871 and 8,204,971, the disclosures of which are hereby expressly incorporated by reference as if fully set forth in their entirety.

The trapping devices, according to the SNAP® machine-to-machine communication system installed on the PC, form a peer-to-peer network as in the first embodiment in which the trapping devices communicate with one another and with the PC. The user can monitor trap status, battery life and signal strength directly from the PC. If the PC has Internet connectivity, the SNAP® software is capable of sending email and text notification to another PC or cell phone over the Internet when trap status has changed.

In view of the foregoing, one object of the present invention is to provide a remote notification electronic rodent trapping system with electronic rodent trapping devices having wireless remote notification capability that allows a user to monitor trap status from a remote location, eliminating the need for users to be in close proximity to an electronic rodent trap to determine whether the trap is functional or has been activated and needs servicing.

Another object of the present invention is to provide a remote notification electronic rodent trapping system in which each electronic rodent trapping device is equipped with an RF transceiver, enabling the trap to communicate with a separate USB transceiver attached to a user's PC.

Yet another object of the present invention is to provide a remote notification electronic rodent trapping system in accordance with the preceding objects in which software installed on the user's Internet-connected PC transparently forwards data to a remote notification website through which the user can monitor trap status including battery life and/or signal strength.

A further object of the present invention is to provide a remote notification electronic rodent trapping system in accordance with the preceding objects in which trap status may be monitored directly by a user having a smartphone with an appropriate smartphone application capable of accessing information stored at a web server over the Internet.

A yet further object of the present invention is to provide a remote notification electronic rodent trapping system in accordance with the preceding objects in which the system is embodied in accordance with one or more types of "cloud" computing.

A still further object of the present invention is to provide a remote notification electronic rodent trapping system in accordance with the preceding objects in which software running at the remote notification website is capable of sending text and email notifications to a remotely located PC, or any device capable of receiving a text message, when trap status has changed.

Still a further object of the invention to provide a remote notification electronic rodent trapping system in accordance with the preceding objects in which electronic rodent trapping devices form wireless nodes that create a mesh network providing machine-to-machine communication.

Still another object of the present invention is to provide a remote notification electronic rodent trapping system in accordance with the preceding objects in which the traps act as nodes that communicate wirelessly with one another, automatically auto-forming a peer-to-peer network that requires no coordinator and that repairs itself if one of the traps/nodes is removed or damaged.

Yet another object of the present invention is to provide a remote notification electronic rodent trapping system according to a second embodiment in which SNAP® software is installed on the user's PC that allows the user to monitor trap status, battery life and signal strength from the PC.

A further object of the present invention is to provide a remote notification electronic rodent trapping system in accordance with the preceding object in which the SNAP® software, when installed on a PC having Internet connectivity, is capable of sending text and email notifications to a remotely located PC or cellular device when trap status has changed.

A still further object of the present invention is to provide a remote notification electronic rodent trapping system in which the electronic rodent trapping devices are configured to communicate with an Ethernet device having an online software tool that does not require a PC.

Yet a still further object of the present invention is to provide a remote notification electronic rodent trapping system in which the electronic rodent trapping devices are configured to communicate with a cellular device having an online software tool that does not require a PC.

These together with other objects and advantages which will become subsequently apparent reside in the details of construction and operation as more fully hereinafter described and claimed, reference being had to the accompanying drawings forming a part hereof, wherein like numerals refer to like parts throughout.

### BRIEF DESCRIPTION OF THE DRAWINGS

Figure 1 is a conceptual schematic of a remote notification electronic rodent trapping system in accordance with a first embodiment of the present invention.
Figure 1A is a conceptual schematic of the use of cloud computing in accordance with the remote electronic trapping system of the type shown in Figure 1.
Figure 2 is a conceptual schematic of a remote notification electronic rodent trapping system in accordance with a second embodiment of the present invention.
Figure 3 is a conceptual schematic of a third embodiment in which the electronic rodent traps communicate with an Ethernet device having an online software tool.
Figure 4 is a conceptual schematic of a fourth embodiment in which the electronic rodent traps communicate with a cellular device having an online software tool.

### DETAILED DESCRIPTION OF THE PREFERRED EMBODIMENTS

In describing preferred embodiments of the invention illustrated in the drawings, specific terminology will be resorted to for the sake of clarity. However, the invention is not intended to be limited to the specific terms so selected, and it is to be understood that each specific term includes all technical equivalents which operate in a similar manner to accomplish a similar purpose.

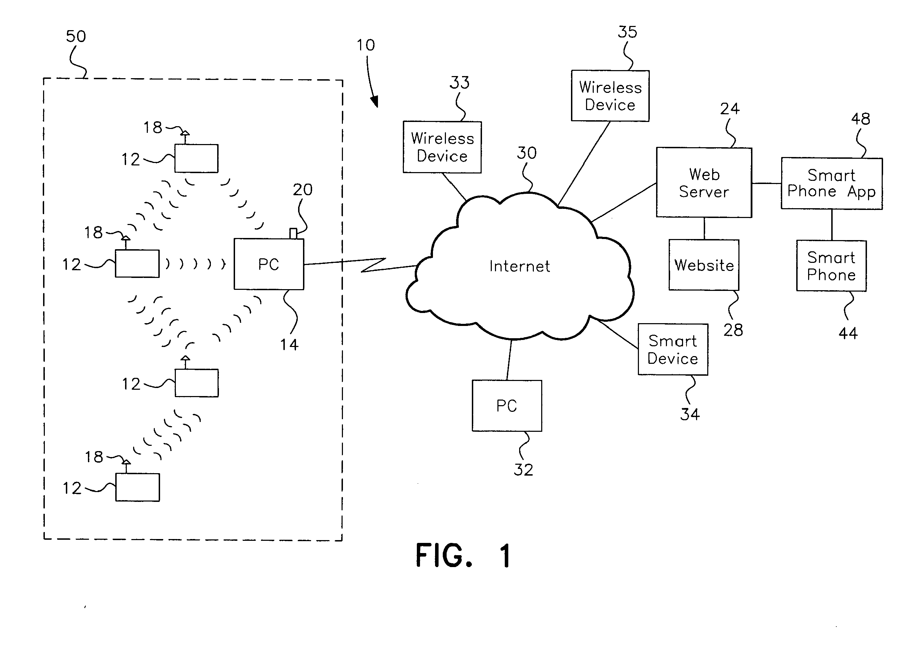

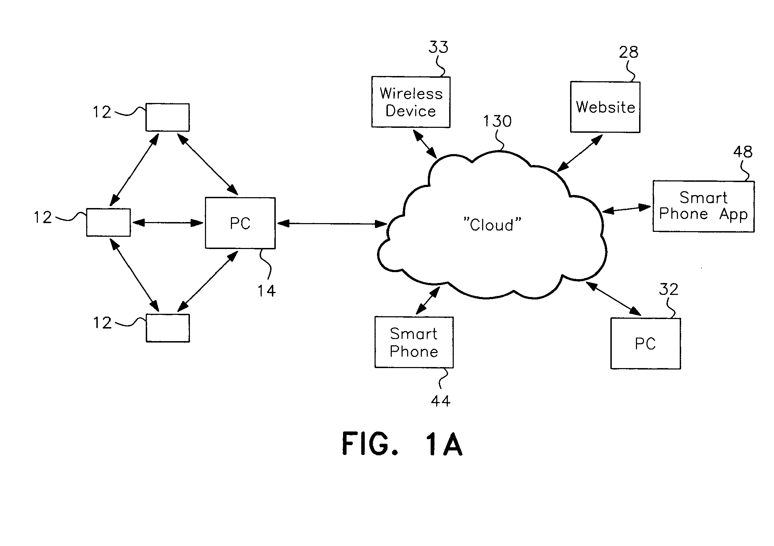

As shown in Figure 1, the present invention is directed to a remote notification electronic rodent trapping system generally designated by reference numeral 10. The system includes a plurality of electronic rodent trapping devices 12 and a base station such as PC 14. The electronic rodent trapping devices may be of the types disclosed in U.S. Patent Nos. 6,836,999; 7,219,466; 7,690,147; and 7,757,430, all of which are co-owned by the assignee of the present invention and hereby expressly incorporated by reference as if set forth in their entirety.

According to the first illustrated embodiment of the present invention shown in Figure 1, the plurality of trapping devices and the PC are configured to form a network 50 in which each of the traps communicates with the PC and preferably with other adjacent traps. The PC, when connected to the Internet 30, accesses a remote notification website 28 that coordinates the monitoring, reporting and control of the rodent trapping systems. The website is configured to send text messages to the PC 14 or other on-line smart device such as a MAC, tablet, smart phone, etc., as well as to any other device capable of receiving a text message. While the system will also work with only one trapping device and the base station, many of the capabilities described herein will not be realized in such a limited configuration. Therefore, the following description will be directed to the illustrated embodiment shown in Figure 1 having a plurality of rodent trapping devices.

Each of the electronic rodent trapping devices 12 has an RF transceiver 18 and communicates with the PC 14 that has an RF USB transceiver 20 attached thereto to receive transmissions from the trapping devices 12. Each of the electronic rodent trapping devices includes a control circuit with a module having an embedded network operating system that enables the device to communicate with the other trapping devices via the transceiver 18. In the illustrated embodiment, the embedded network operating system is the SNAP® operating system, as will be described more fully hereinafter.

The PC 14 is provided with software that enables the user to access the remote notification website 28 and which initiates forwarding of information thereto. The software incorporated within the present invention, including that on the PC and at the website, was developed by Exosite of Minneapolis, MN.

The remote notification website 28, hosted by web server 24 which stores all of the trap status information, enables the user to review the content of RF transmissions received by the PC from the traps and thereby monitor trap status including one or more of whether the trap has dispatched a rodent or the trap has been deactivated, the battery life and the signal strength of each trap on the network.

In use, a plurality of electronic rodent trapping devices 12 are placed in various locations within a network area, such as in and around the user's home. According to the SNAP® protocol, the trapping devices, when powered on, automatically form a mesh network. As part of the mesh network, each trapping device communicates with every other trapping device that is within range on a peer-to-peer basis with no need for a coordinating device. The trapping devices act as repeaters for signals received from adjoining trapping devices so that traps that cannot communicate directly with the PC 14 due to distance or interference, can nonetheless communicate with the PC through one or more neighboring traps. If one of the traps is damaged or removed, the network is "self-healing" in that those of the remaining trapping devices that had relied upon the damaged trap as a repeater will find new communication pathways to the PC.

The transceivers 18 in the trapping devices can communicate with the PC 14 and with other trapping devices 12 in the network that are located up to approximately a quarter of a mile away when outdoors with line-of-sight. Indoor range is dependent on the number of interfering structures and/or RF signals in the network area. Testing has indicated that with standard building construction, the traps have a communication range of between about 100 to 250 feet. Again, because of the mesh configuration of the traps operating with the SNAP modules, traps that are not able to communicate with the base station directly due to interference of some sort can still provide trap status information to the base station by relaying their transmission through another trap which acts as a repeater. ,

To conserve battery life, the trapping devices are preferably configured to have a sleep state and an active state. The sleep state requires only low current, increasing the battery life of the trapping devices. The active state is entered at regular intervals during which the traps communicate with one another and with the PC. To ensure effective communication, all of the traps are coordinated so that their active states occur at the same time. The active state is only maintained for a set time period, after which the trapping devices return to the sleep state. The frequency with which the trapping devices enter the active state depends upon user requirements and/or preferences. One example would be that the trapping devices be set to "wake up" or enter the active state at two minute intervals. While the traps are in the active state, they send a transmission to the PC 14 and to the surrounding trapping devices if a change in trap status is detected.

The user can access the information provided by the trapping devices to the PC by logging onto the remote notification website 28 with a PC 32 or other smart device 34. For example, when a killing cycle has been performed in response to activation of the trap by a rodent, the user upon accessing the remote notification website is notified that the trap has been activated and needs to be checked and/or emptied. The remote notification website is also able to send email messages to the remote PC 32 over the Internet, as well as to any wireless device 33 capable of receiving an email message including, but not limited to, a cell phone, a smartphone, a PDA, a tablet, etc. The remote notification website 28 can also send text messages to any wireless device 35 capable of receiving a text message such as a cell phone, smartphone, pager, etc. Therefore, when certain events occur and are reported to the PC 14, such as a change in the status of one of the traps 12, the PC 14 can forward this information to the web server 24 which makes the information available to the remote notification website 28. The website 28 then notifies the user by communicating over the Internet 30 to a remotely located PC 32 or other smart computing device 34 through which the user has accessed the website 28. When no activity is detected, the trapping devices enter a sleep mode that requires only low current, increasing the battery life of the trapping devices.

When sending text and/or email notification of trap status to a remote computing device, the remote notification website 28 identifies one or more specific traps which are the subject of the notification and includes at least one of a notice that a particular one of the identified traps needs to be checked, the particular trap's battery life and the particular trap's signal strength. The user is therefore able to avoid unnecessary trap checks and rather to attend to only those traps requiring service.

As also shown in Figure 1, the web server 24 may also be directly accessed by a user having a smartphone 44 with an appropriate smartphone application ("smartphone app") 48. The smartphone app 48 can access the web server 24 in the same way that the website 28 accesses the server 24. The smartphone app 48 pulls data from the server 24 and displays it to the user via the app 48 in the same way that the website 28 pulls data from the server 24 and displays that data to the user via a web page.

As shown in Figure 1A, the remote notification electronic rodent trapping system may also be embodied in accordance with one or more types of cloud computing 130, in which cloud providers manage the infrastructure and platforms on which one or more applications run, as would be understood by persons of ordinary skill in the art.

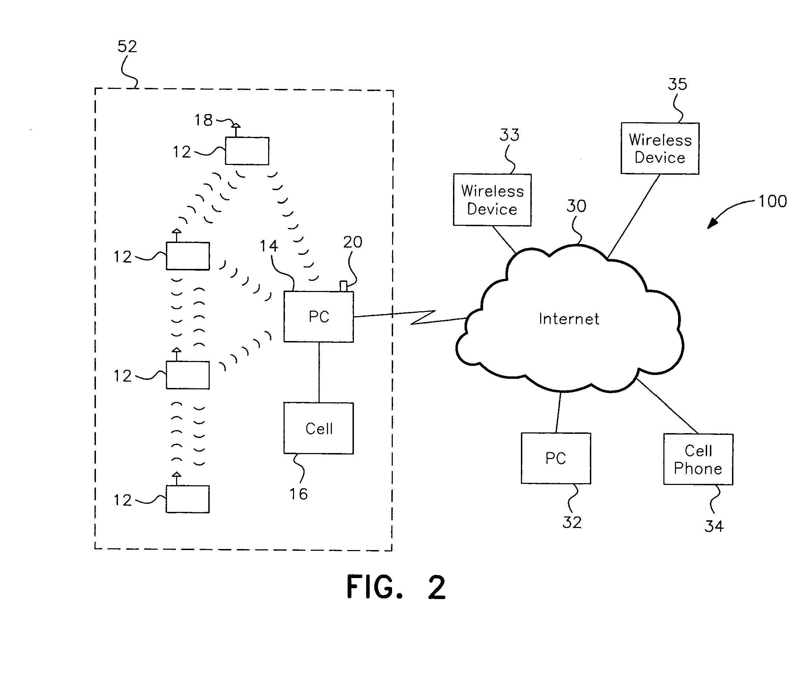

According to a second embodiment shown in Figure 2, SNAP® software may be loaded on the PC 14 to enable the PC to communicate trap status data to a smart device such as cell phone 16 that is on the local network 52. The PC, when connected to the Internet 30, is able to send email messages to a remote PC 32 or text messages to a cellular device 34 that is outside the network area. Any device capable of receiving email or a text message, such as wireless devices 33 and 35, may be notified in the same way. Therefore, when certain events occur and are reported to the PC 14, such as a change in the status of one of the traps 12, the PC 14 can notify the user by communicating with the cellular device 16 and/or other remotely located PCs and mobile wireless devices over the Internet.

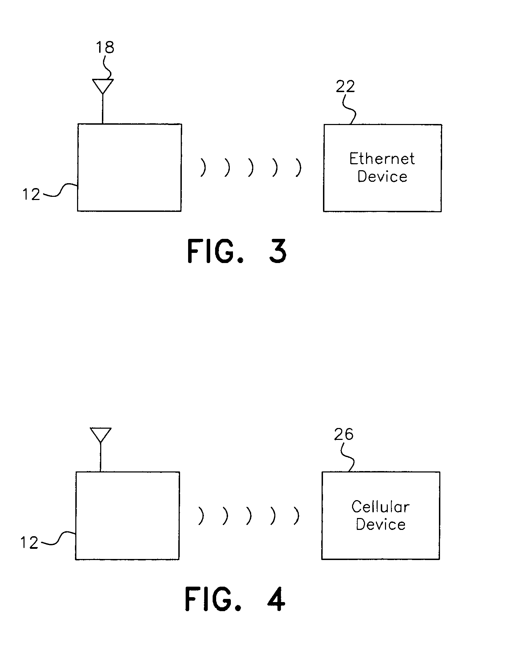

As an alternative to using a PC 14 as the base station computing device, a plurality of electronic trapping devices 12 configured in accordance with the present invention may form a mesh network that communicates with an Ethernet device 22 having an online software tool as the base station, as shown in Figure 3. Similarly, the trapping devices 12 may communicate with a cellular or "smart" device 26 having an online software tool as the base station, also eliminating the need for a home PC, as shown in Figure 4. As used herein, the term "computing device" is intended in its broadest sense and includes a PC, an Ethernet device and a cellular or "smart" device.

In use, the system according to the present invention provides a method for remote monitoring of an electronic rodent trapping device from a base station. The method includes providing the electronic trapping devices with an RF transceiver configured to send RF transmissions containing trap status data, and a base station computing device configured to receive the RF transmissions at a distance from the trapping device. The electronic rodent trap sends a transmission containing trap status data which is received by the base station computing device. The base station computing device then is able to notify a user of the trap status data contained in the RF transmissions.

According to the first embodiment, the step of providing notification can include having the user log onto a remote notification website dedicated to monitoring and reporting on remote electronic trap network systems as described herein. Once connected to the website 28, the PC forwards trap information to the web server 24 which stores the trap status information. By accessing the website 28, the user can review the trap status information from a remotely located PC or other smart device used to access the website. The step of providing notification can also be performed by a user with a smartphone 44 having an appropriate smartphone app 48 which accesses the web server 24 directly. The remote notification website and server 24 can also send a text or email notification to any remote device capable of receiving text messages (such as cell phones, smartphones, pagers, etc.) or email (such as cell phones, smartphones PDAs, tablets, etc.), and display the trap status data on a display of the remote device.

According to the present invention, the method includes providing a plurality of electronic trapping devices, each having an RF transceiver and configured to send RF transmissions containing trap status data to the base station computing device and preferably to each other. The plurality of electronic trapping devices auto-form a mesh network in which the traps send RF transmissions to the base station either directly or through another trapping device in the mesh network acting as a repeater.

The formation of a network of wirelessly communicating electronic rodent trapping devices and a base station as described herein eliminates the need for the user to physically check each trapping device on a regular basis in order to determine whether or not each trap is operational, contains a dispatched rodent, etc., a process which is time consuming and costly. With the present invention, the user is able to easily remain apprised of the status of a plurality of electronic trapping devices and even to receive trap status information over the Internet using a PC or cellular device. Further, the machine-to-machine communication relied upon in the mesh network created by the present invention makes the system very robust so as to be able to continue functioning effectively for remote monitoring even if one of the traps becomes unavailable.

Accordingly, the present invention has been described with some degree of particularity directed to the exemplary embodiments of the present invention. It should be appreciated, though, that the present invention is defined by the following claims construed in light of the prior art so that modifications or changes may be made to the exemplary embodiments of the present invention without departing from the inventive concepts contained herein.

## Claims

1. A remote notification electronic rodent trapping system comprising:
a least one electronic rodent trapping device having an RF transceiver and configured to send RF transmissions containing trap status data; and
a base station computing device configured to receive said RF transmissions at a distance from said trapping device and to provide an output to said computing device for review by a user, said base station computing device enabling the user to monitor status of the trapping device without having to be in physical proximity to the trap.

2. The remote notification electronic rodent trapping system as set forth in claim 1, wherein said system includes a plurality of electronic rodent trapping devices configured to send to and receive RF transmissions containing trap status data from each other and to communicate said RF transmissions to said base station.

3. The remote notification electronic rodent trapping system as set forth in claim 2, wherein said plurality of trapping devices auto-form a mesh network, said trapping devices communicating said RF transmissions to said base station either directly or through
another trapping device in said mesh network acting as a repeater.

4. The remote notification electronic rodent trapping system as set forth in claim 3, wherein said mesh network is self healing, trapping devices on said network automatically finding new paths to the base station upon removal of or damage to one of the trapping devices, and preferably said base station computing device being a PC having a USB transceiver to receive said RF transmissions, said PC being connected to the Internet and having software that forwards trap status data contained in the RF transmissions to a remote notification website through which website a user, using an Internet enabled device, can monitor trap status.

5. The remote notification electronic rodent trapping system as set forth in claim 4, wherein the remote notification website is able to send email and text notification to any remote device capable of receiving email or text messages, and wherein preferably said text and/or email notification of trap status sent from said website identifies one or more specific traps and includes notice of a need for a particular trap to be checked, a particular trap's battery life and/or a particular trap's signal strength.

6. The remote notification electronic rodent trapping system as set forth in claim 4 wherein said base station computing device is a PC having a USB transceiver to receive said RF transmissions, said PC being connected to the Internet and having software that forwards trap status data contained in the RF transmissions to a web server hosting a remote notification website, the web server being directly accessible to a user having a smartphone with a smartphone app through which the user, using the smartphone, can monitor trap status.

7. The remote notification electronic rodent trapping system as set forth in claim 1 wherein said base station computing device is a PC having a USB transceiver to receive said RF transmissions, said PC having software loaded thereon that allows a user to check trap status data directly from the PC, preferably said output that is provided to said base station computing device being shown on a display of the PC.

8. The remote notification electronic rodent trapping system as set forth in claim 1 wherein said base station computing device is a cellular device and said output is shown on a display of the cellular device, or said base station computing device is an Ethernet device or a cellular device having an online software tool.

9. The remote notification electronic rodent trapping system as set forth in claim 1 wherein said system further includes a remote notification website to which the base station computing device forwards trap status data over the Internet, said remote notification website being able to send email and text notification to any remote device capable of receiving email or text messages, said base station computing device preferably being a PC, and said second computing device preferably being a cellular device or a PC.

10. A method for remote monitoring of an electronic rodent trapping device from a base station comprising:
providing an electronic trapping device having an RF transceiver and configured to send RF transmissions containing trap status data;
providing a base station computing device configured to receive said RF transmissions at a distance from said trapping device and to provide a user with a computer output indicating the trap status data contained in said RF transmissions;
transmitting by said electronic rodent trap a transmission containing trap status data;
receiving said transmission by said base station computing device; and
said base station computing device providing a user with a computer output indicating the trap status data contained in said RF transmissions.

11. The method as set forth in claim 10, further comprising the step of forwarding the computer output indicating the trap status data contained in said RF transmissions to a remote notification website where a user with an Internet enabled device can review and monitor the trap status data by logging onto the website.

12. The method as set forth in claim 11, further comprising the step of said website sending an email and text notification to any remote device capable of receiving email or text messages.

13. The method as set forth in claim 10, wherein said step of providing an electronic trapping device includes providing a plurality of electronic trapping devices, each trapping device having an RF transceiver and configured to send RF transmissions containing trap status data to each other and to the base station computing device, said step of providing a plurality of electronic trapping devices including having said plurality of electronic trapping devices auto-form a mesh network in which said trapping devices communicate said RF transmissions to said base station either directly or through another trapping device in said mesh network acting as a repeater.

14. The method as set forth in claim 10, further comprising the step of forwarding the computer output indicating the trap status data contained in said RF transmissions to a web server configured to receive and store the trap status data, a user with a smartphone and a smartphone app being able to review and monitor the trap status data using the smartphone app.
